# EUROPEAN PATENT SPECIFICATION

(11) **EP 3 333 009 B1**
(45) Date of publication and mention of the grant of the patent: **20.03.2019**
(21) Application number: 17198756.3
(22) Date of filing: 27.10.2017
(51) Int. Cl.: B60L 11/18, H02J 7/00, H02M 1/00

(54) **SYSTEM FOR RE-CHARGING AN ACCUMULATOR OF ENERGY OF AN ELECTRIC VEHICLE (EV)**
SYSTEM ZUM WIEDERAUFLADEN EINES ENERGIESPEICHERS EINES ELEKTROFAHRZEUGS
SYSTÈME DE RECHARGE D'UN ACCUMULATEUR D'ÉNERGIE D'UN VÉHICULE ÉLECTRIQUE (EV)

(30) Priority: 07.12.2016 CH 16102016
(43) Date of publication of application: 13.06.2018
(73) Proprietor: Evtec AG, 6012 Kriens-Obernau (CH)
(72) Inventor: KRAMIS, Markus, 6020 Emmenbrücke (CH); BUCHER, Roland, 6280 Hochdorf (CH)
(74) Representative: Zardi, Marco

(56) References cited:
- EP-A2- 1 977 495
- WO-A1-2014/207267
- US-A- 6 140 799
- US-A1- 2003 038 612

## Description

### Field of application:

The present invention relates to a system for re-charging an accumulator of energy of an electric vehicle (EV).

The present invention also relates to a method for re-charging an accumulator of energy of an electric vehicle (EV).

### Prior art:

As known, a system for re-charging an accumulator of energy of an electric vehicle (EV) comprises a converter unit connectable to the accumulator, to transfer electric energy from the converter unit to the accumulator. The converter unit is included in a charging power station, provided with a plug to connect a socket of an electric cable adapted to be connected, at another end, to the accumulator of the electric vehicle, in particular a car.

In some applications, the flow of electric energy may be from the accumulator to the converter unit , in which case it is the stations to be recharged. This is useful, for instance, when the energy demand is too high and the user of the electric vehicle is available in providing energy to the grid (through the station), since he does not need to immediately use the vehicle.

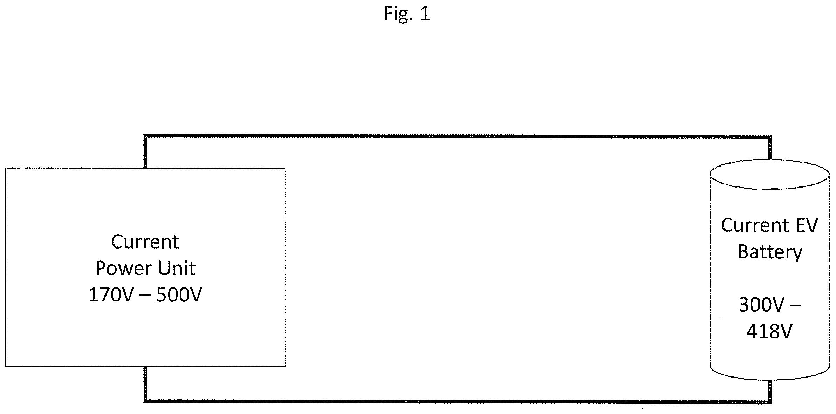

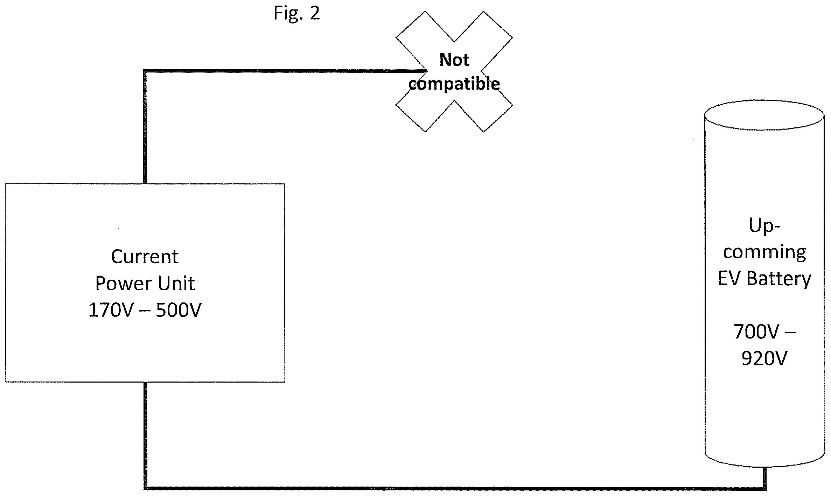

On the other end, it is also known that electric parameters of accumulators in EVs are continuously increasing, to provide better performances, for instance fast recharges of the accumulators. It is expected that presently used accumulators, characterized by voltages between 300 V and 418 V, as schematically represented in figure 1, will be substituted by accumulators, characterized by voltages between 700 V and 920 V, as schematically represented in figure 2. This change has a consequence that presently used converter units, for instance working at voltages between 170 V and 500 V will be no more adapted to recharge upcoming accumulators.

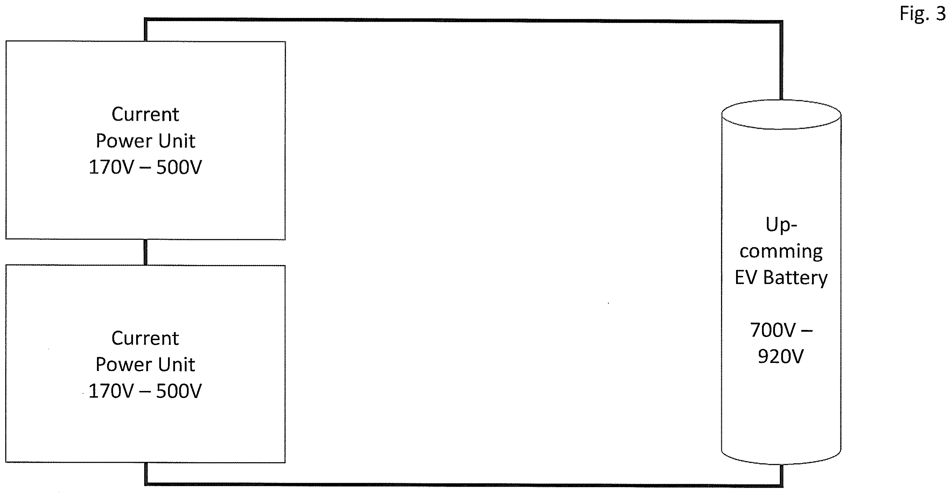

One solution to overcome this problem, avoiding replacements of presently used converter units, is to connected two or more units together, as represented in figure 3, each having a predetermined voltage, for instance between 170 V and 500 V, and to increase the voltage to be provided to the accumulators up to the sum of the voltages of each converter unit.

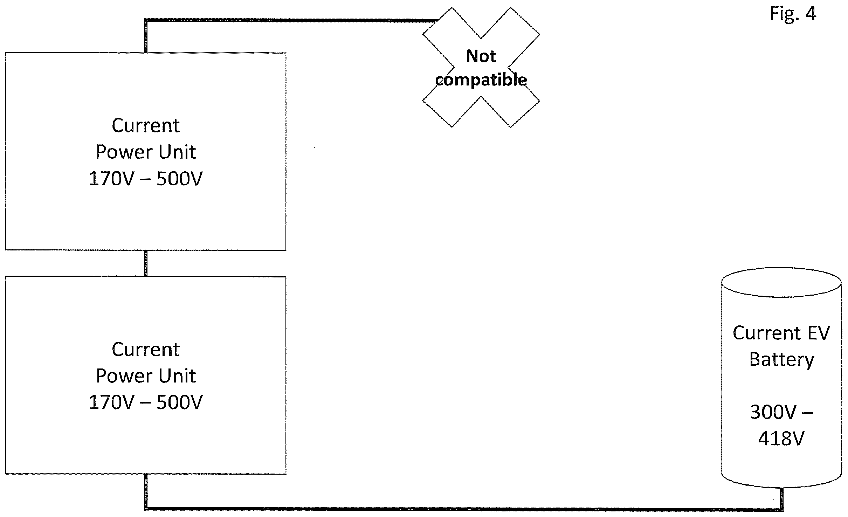

However, this solution has the drawback that the converter units connected together are no more compatible with presently used accumulators, working at the voltage of only one of the connected converter units, for instance between 300 V and 418 V, as represented in figure 4.

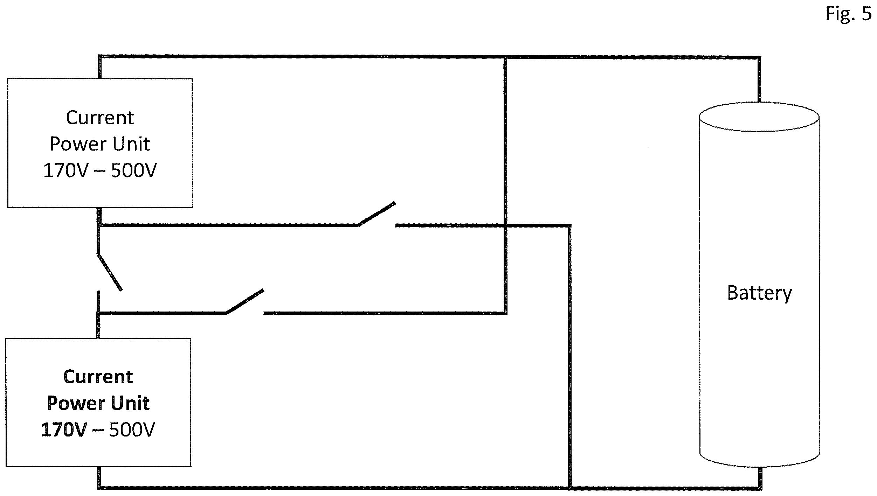

Another solution to overcome the compatibility problem mentioned above is to introduce a switch between the converter units, to use the units together (switch switched on) or separately (switch switched off), and to connect each converter unit directly to the accumulator to be recharged through a corresponding switch (figure 5).

According to this system for recharging EV, if the accumulator is detected to have a voltage substantially equal to only one of the converter units, than the switch between the converter units is opened (off) and one or both of the switch between a corresponding unit and the accumulator is closed (on). In this way, one or two of the two units is used to recharge the accumulator.

To the contrary, if the accumulator is detected to have a voltage substantially equal to the voltages provided by both converter units, than the switch between the converter units is closed (on) and the switches between the units and the accumulator are opened (off). In this way, the two units are used together to recharge the accumulator.

Although appreciated because compatible with different accumulators, this system has another drawback. Indeed, in case the switch between the recharging unis is closed (on) and also one (or both) the switches between the recharging station and the accumulator is (are) closed, a short circuit may happen. This is very dangerous, especially considering the high voltages and currents. WO2014/207267 discloses a system to recharge an electric vehicle according to the prior art.

The problem at the base of the present invention is to provide a system to recharge an accumulator of an EV which is compatible with substantially all the accumulators presently available and also with upcoming accumulators, i.e. accumulators characterized by higher voltages, at the same time the system being safe and preventing accidental usage of too high voltages, when an accumulator is not compatible with high voltages or dangerous short circuits, overcoming all the limitations that presently affect the system of the prior art.

### Summary of the invention:

The solution at the base of the present invention is to provide a system to recharge an accumulator of electric energy of an electric vehicle (EV), comprising the features of claim 1.

More particularly, if the switch is switched off, one or both the converter units recharge the accumulator through the corresponding circuit, and a current flow from the accumulator to each of the converter units is blocked through the diodes.

On the other hand, when the two converter units are connected in series, both the converter units are used for recharging the accumulator through the series connection. In this case, if required by circumstances, a current flow from the accumulator to the converter units is allowed through the series connection.

According to the solution idea given above, the technical problem is solved by a system according to claim 1.

Further features and characteristics of the system and method of the present invention will be apparent from the description given hereafter with reference to the drawings only for exemplificative purpose and without limiting the scope of protection of the invention.

### Brief description of the drawings:

Figure 1 schematically represents a recharging system of an electric vehicle, according to the prior art.
Figure 2 schematically represents the recharging system of figure 1, when connected to an incompatible accumulator.
Figure 3 schematically represents another recharging system of an electric vehicle, according to the prior art.
Figure 4 schematically represents the recharging system of figure 3, when connected to an incompatible accumulator.
Figure 5 schematically represents another recharging system of an electric vehicle, according to the prior art.

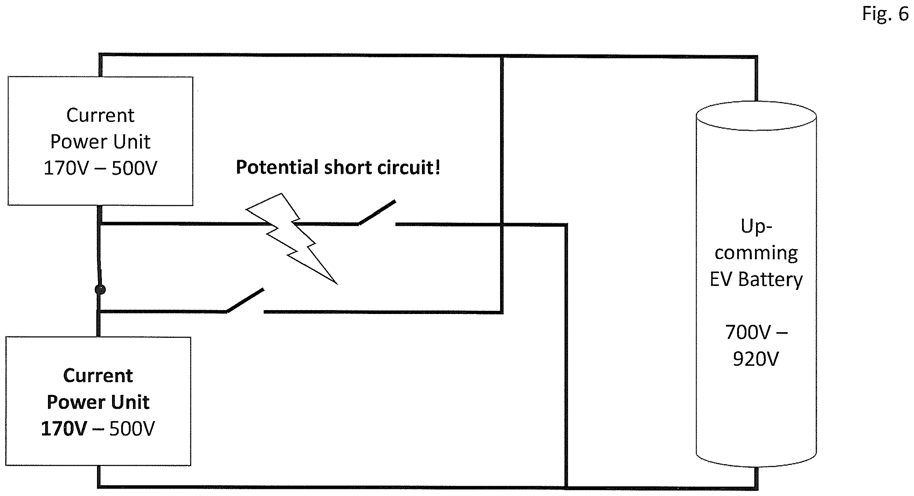

Figure 6 schematically represents the recharging system of figure 5, when a short circuits occurs.
Figure 7 schematically represents a recharging system of an electric vehicle, according to the present invention.
Figure 8 schematically represents the recharging system of figure 7, during recharge of a high voltage accumulator.
Figure 9 schematically represents the recharging system of figure 7, during recharge of a lower voltage accumulator.
Figure 10 is a picture representing a real implementation of the system of figure 7.
Figure 11 is a detail of the picture of fig. 10.
Figure 12 is the recharging system of figure 9, in more detail.

### Detailed description:

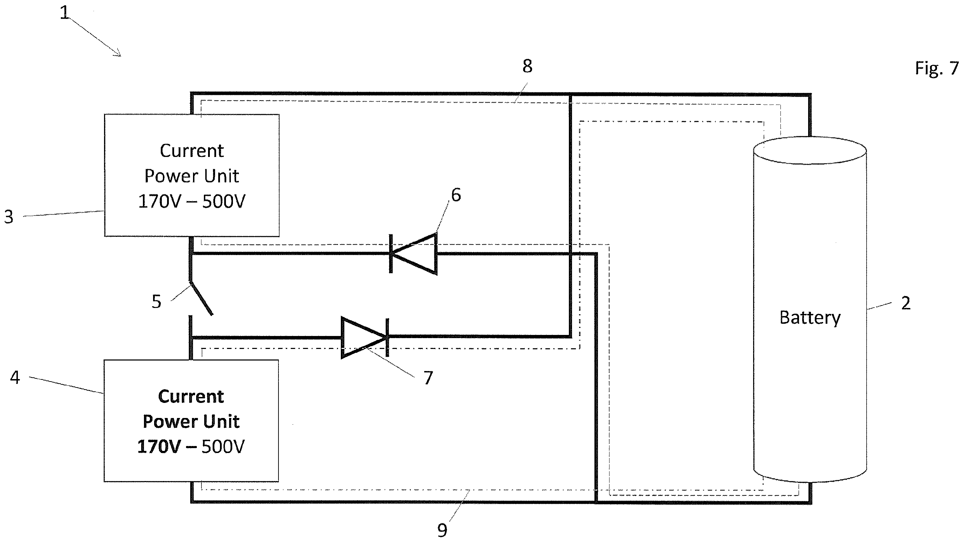

With reference to figure 7, it is schematically represented and indicated with number 1 a system to recharge an accumulator 2 of electric energy of an electric vehicle (EV) according to the present invention.

The system 1 includes a first converter unit 3 connectable to the accumulator 2, to transfer electric energy from the first converter unit 3 to the accumulator 2. The converter unit 3 is included in a charging power station, provided with a plug to connect a socket of an electric cable, the cable being also adapted to be connected, at another end, to the accumulator 2 of the electric vehicle, in particular a car.

The first converter unit 3 has a first voltage V3 and may form a first electrical circuit 8 with the accumulator. For instance, the converter unit 3 provides a voltage between 170 V and 500 V.

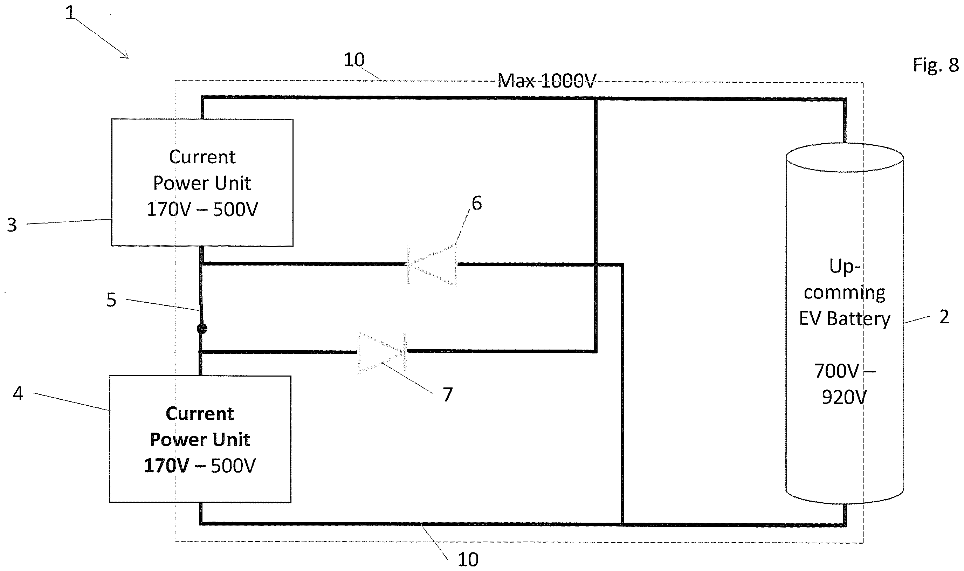

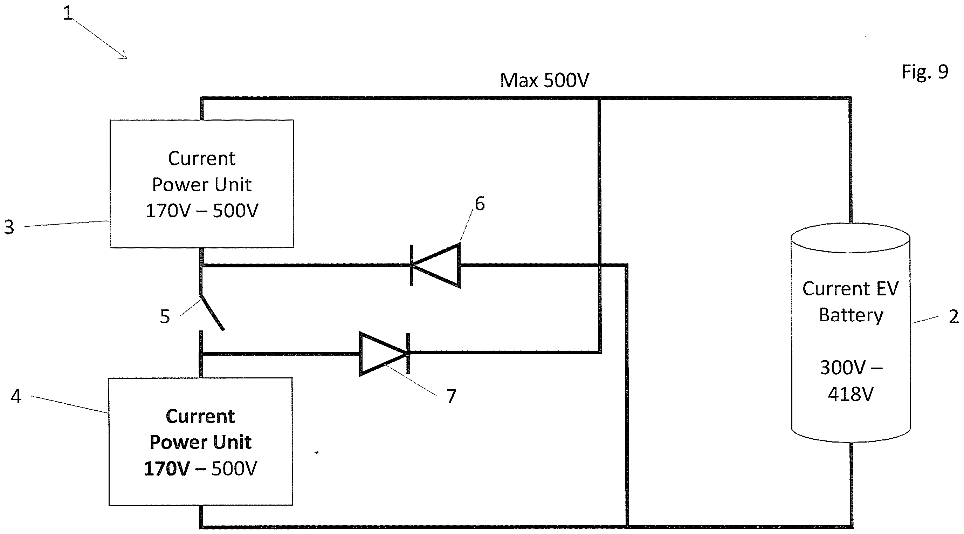

Also the accumulator 2 is characterized by specific electric parameters, including a voltage V2 and a current C. Accumulators of different EVs may be characterized by different electric parameters V2, C. For instance, an accumulator 2 of a first EV may have first electric parameters, for example a voltage between 300 V and 418 V, as schematically represented in figure 9; an accumulator 2 of another EV may have second electric parameters, for example a voltage between 700 V and 920 V, as schematically represented in figure 8.

Of course, the voltages indicated above are not limiting the scope of protection of the present invention as represented by the independent claim and the first and second electric parameters of the accumulators or the electric parameters of the converter unit may be different.

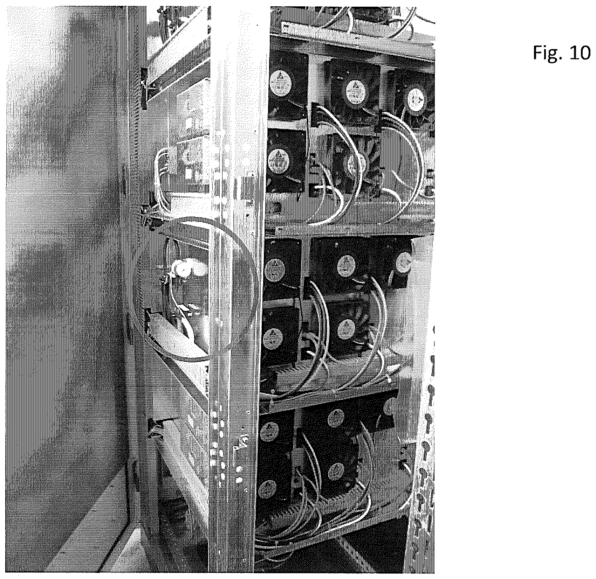

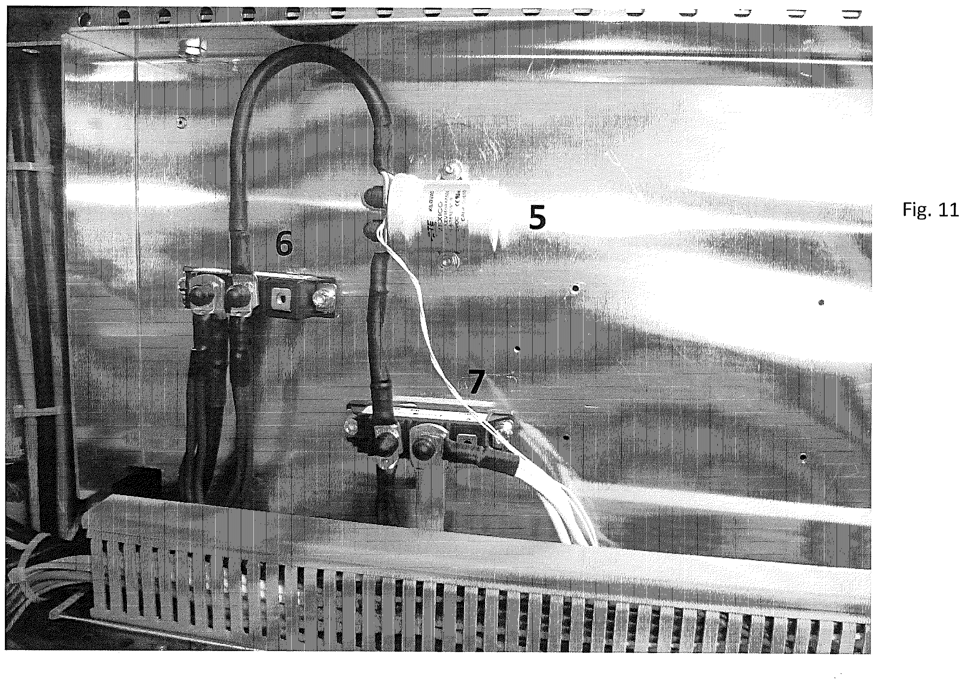

The system 1 includes also a second converter unit 4, included in a charging power station which may be provided with a plug to connect a socket of an electric cable, the cable may also be adapted to be connected, at another end, to the accumulator 2 of the electric vehicle. The same charging power station includes the first and the second converter units, as represented in figure 10 and 11.

Although the example given here after relates to a first and second converter units only, more than two converter units may be connectable together in the system 1 with obvious modification to the said system.

The second converter unit 4 has a second voltage V4 and may form a second electrical circuit 9 with the accumulator. The second converter unit, for instance, provides same voltages of the first converter unit, i.e. between 170 V and 500 V and, therefore, it is adapted to recharge accumulator 2 compatible with first electric parameters, through the second electrical circuit 9.

The first converter unit 3 and the second converter unit 4 are each connectable to the accumulators 2 to transfer electric energy. Energy may be transferred to the accumulator from one of the first and second converting units, or from both the converter units in parallel to the accumulator.

In this respect, the system includes means to selectively control recharge of the accumulator 2 with one of the first or the second converter units 3, 4, or with both the first and the second converter units 3, 4 in parallel.

For instance, in the example given above, where the accumulator has the first electric parameters (300 V and 418 V), the accumulator 2 may be recharged with the first and second converter units 3, 4 in parallel and with a voltage still between 170 V and 500 V, but with a higher current than the current provided by only one of the first and second converter units, when used alone. Of course, the accumulator 2 may be recharged with only one of the first and second converter units, with a voltage still between 170 V and 500 V, but with the current provided by said only one converter unit. In all these cases, the recharge is through the circuits 8 and/or 9.

To the contrary, if the accumulator 2 has the second electric parameters (for instance between 700 V and 920 V), the converter unit 3 or 4 has a voltage too low to recharge alone the accumulator or to recharge it with said parallel connection.

In order to recharge also accumulator 2 with the second electric parameters, the system 1 of the present invention provides that the first converter unit 3 and the second converter unit 4 are also connectable together in series.

In this respect, the system includes a switch 5 adapted to connect in series the first converter unit 3 and the second converter unit 4 and to form a third electrical circuit 10 (fig. 8) connecting in series the first and second converter units with the accumulator 2, to recharge the accumulator 2 with a higher voltage provided by the first converter unit 3 and the second connected unit 4 in series. In the example given above, where the first and second converter units have a same voltage between 170 V and 500 V, the accumulator may be recharged with a voltage between 340 V and 1000 V if the units connected in series.

Still according to present invention, a first diode 6 is between the accumulator 2 and the first converter unit 3, to prevent a current flow from the accumulator 2 to the first converter unit 3 on the first electrical circuit 8. Similarly, a second diode 7 is between the accumulator 2 and the second converter unit 4, to prevent a current flow from the accumulator 2 to the second converter unit 4 on the second electrical circuit 9.

This diodes 6, 7 prevents short circuits when the switch is switched on to recharge the accumulator through the third circuits 10.

The circuit 8, 9, or 10 to be used to recharge the accumulator is selected through a controller. The controller controls the switch 5.

More particularly, the controller detects a voltage V2 of the accumulator 2 and opens the switch (switch off) if a voltage V3+V4 of the first and second converter units 3, 4 connected in series is not compatible with the voltage V2 of the accumulator. For instance, in the example given above, when
the accumulator has a voltage between 300 V and 418 V,
the first circuit has a voltage between of 170 V and 500 V and
the second circuit has a voltage between of 170 V and 500 V,
the controller opens the switch, since the voltage of the first and second converter units 3, 4 connected in series is not compatible (too high) with the voltage of the accumulator.

To the contrary, the controller closes the switch (switch on) if the voltage V2 of the accumulator is compatible with the voltage V3+V4 of the first and second converter units 3, 4 connected in series; this happens for instance when the first circuit has a voltage between 170 V and 500 V, the second circuit has a voltage between of 170 V and 500 V and the accumulator has a voltage between 700 V and 900 V. In this case, the accumulator is recharged on the third circuit 10.

Advantageously, on the third circuit 10, a current flow from the accumulator 2 to the first and the second converter units 3, 4 connected in series is allowed when the switch is closed (switched on), as well as a current flow from the first and the second converter units 3, 4 to the accumulator 2. Therefore, advantageously, depending on the application, for instance on the load of the electrical grid or on user requirements, the system may control recharge of the accumulator or recharge of the station(s) associated to the converter units on the circuit 10.

The invention further relates to a method of controlling the recharge of an accumulator. The method may be used to control the system as described above.

For instance, still with reference to the example (voltages) given and according to the method of the present invention, if the accumulator 2 to be recharged has the first electric parameters, i.e. between 300 V and 418 V, the controller opens the switch 5 and therefore the accumulator 2 is connected to the converter unit 3 through diode 6 and to the converter unit 4 through diode 7, and may receive electric energy through this two converter units in parallel, or through only one connection conversion unit.

To the contrary, if the accumulator 2 to be recharged has the second electric parameters, i.e. between 700 V and 920 V, according to the method of the invention, the controller closes the switch 5 and therefore the accumulator 2 is connected to the first and second converter units 3, 4 in series and receives electric energy through both the first and the second converter units. Diodes 6 and 7 prevents short circuits.

According to the method of the invention, the controller is configured to open the switch 5, if a voltage of the accumulator 2 is compatible with a voltage of only one of the first and second converter units 3, 4 (in the example above, the unit 3), or to close the switch 5, if the voltage of the accumulator 2 is compatible with a *sum* of the voltages of the first and second converter units 3, 4.

More particularly, the controller is further configured to make the following compatibility check:
- comparing the voltage V2 of the accumulator 2 with the voltage V3 of the first converter unit 3 and/or comparing the voltage V2 of the accumulator 2 with the voltage V4 of the second converter unit 4;
- closing the switch if the voltage V2 of the accumulator is more than the voltage V3, V4 of at least one of the first and second converter unit of a predetermined threshold.

According to an embodiment of the method of the present invention, when the voltage of the accumulator 2 is compatible with both the voltage of the first and second converter units connected in parallel and with the voltage of the first and second converter units connected in series, the accumulator is preferably recharged with the units connected in parallel, due to a higher output current than the current provided by a series connection.

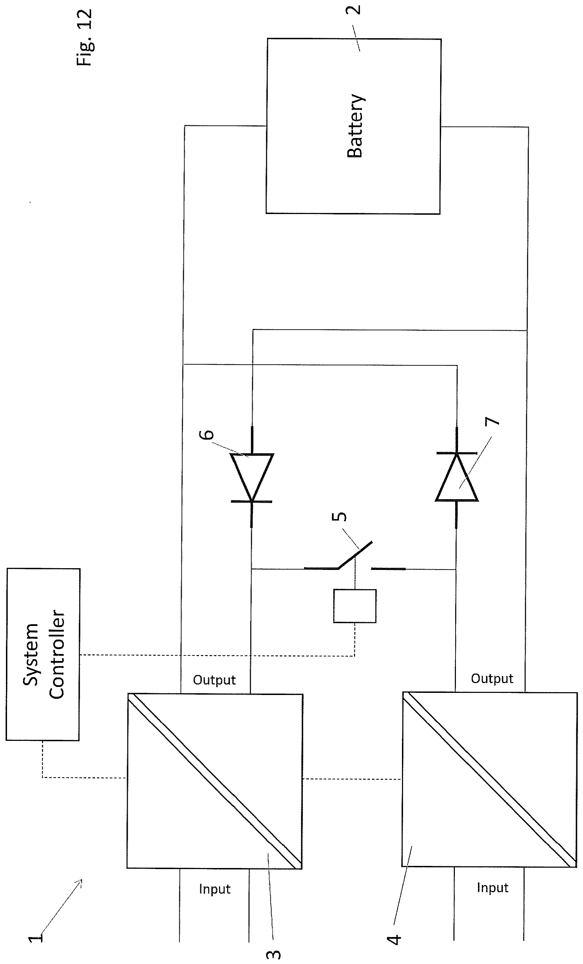

For instance, with the ranges of voltages given in the above example (converter units with voltages between 170 V and 500 V), when the accumulator 2 has a voltage of 450 V, both the parallel or series connections could be selected to recharge the accumulator 2. As said above, in this case, preferably the first and second converter units are connected in parallel to recharge at 450 V with a higher current. However, nothing prevents that, based on application scenarios, the series connection may be selected. Figure 12 is a block diagram schematically representing the controller in the system. Power converter units are provided to transfer energy to the accumulator 2 by series or parallel operation of the converter units. A galvanic isolation of the power converter units is provided. The series switch may work only when power converters are galvanic isolated.

Advantageously, the system of the present invention improves safety and allow to adapt presently used recharging stations (units) to upcoming accumulators having electric parameters not compatible with electric parameters of converter units taken alone, solving all the problems presently affecting the prior art system and avoiding risks for the users.

## Claims

1. System (1) to recharge an accumulator (2) of electric energy of an electric vehicle (EV), comprising:
- a first converter unit (3) having a first voltage (V3) and at least a second converter unit (4) having a second voltage (V4),
- a first electrical circuit (8) connecting the first converter unit (3) and the accumulator (2), to recharge the accumulator (2) with the first converter unit (3),
- a second electrical circuit (9) connecting the second converter unit (4) and the accumulator (2), to recharge the accumulator (2) with the second converter unit (4),
the first converter unit (3) and the second converter unit (4) being galvanically isolated; the first converter unit (3) and the second converter unit (4) being included in a charging power station;
**characterized by**:
- a switch (5) connected to the first converter unit (3) and to the second converter unit (4), and adapted to connect in series the first converter unit (3) and the second converter unit (4) and to form a third electrical circuit (10) connecting in series the first and second converter units with the accumulator (2), to recharge the accumulator (2) with the first converter unit (3) and the second connected unit (4) in series,:
- a first diode (6) between the accumulator (2) and the first converter unit (3) on said first electrical circuit (8), an end of the first diode (6) being connected to the connection of the switch (5) with the first converter unit (3) and an opposite end being connected to one of the accumulator (2) terminal, to prevent a current flow from the accumulator (2) to the first converter unit (3) on the first electrical circuit (8),
- a second diode (7) between the accumulator (2) and the second converter unit (4) on said second electrical circuit (9), an end of the second diode (7) being connected to the connection of the switch (5) with the second converter unit (4) and
an opposite end being connected the other accumulator (2) terminal, to prevent a current flow from the accumulator (2) to the second converter unit (4) on the second electrical circuit (9),
- a controller of the switch (5) adapted to detect a voltage (V2) of the accumulator (2), and adapted to open the switch (switch off) and to recharge the accumulator (2) with one of the first or the second converter units (3, 4) on said first and second electrical circuit (8, 9), or with both the first and the second converter units (3, 4) in parallel, if a voltage (V3+V4) of the first and second converter units (3, 4) connected in series is not compatible with the voltage (V2) of the accumulator, or close the switch (switch on) and to recharge the accumulator (2) with the first and second converter units (3, 4) in series on said third electrical circuit (10) or to provide current from the accumulator (2) to the first and the second converter units (3, 4), if said voltage (V2) of the accumulator is compatible with the voltage (V3+V4) of the first and second converter units (3, 4) connected in series

2. System according to claim 1, **characterized by** the fact that said controller is configured to open said switch (5) to recharge the accumulator (2) with the first and the second converter units (3, 4) in parallel, if said voltage (V2) of the accumulator is compatible with both the voltage (V3+V4) of the first and second converter units (3, 4) connected in series and with the voltage (V3, V4) of the first and second converter units (3, 4) connected in parallel.

3. System according to claim 1, **characterized by** the fact that said controller is configured to open the switch (5), if the voltage (V2) of the accumulator (2) is compatible with the voltage (V3, V4) of only one of the first and second converter units (3, 4), or to close the switch (5), if the voltage of the accumulator (2) is compatible with a sum of the voltages (V3, V4) of the first and second converter units (3, 4), the controller being further configured to make the following compatibility check:
- comparing the voltage (V2) of the accumulator (2) with the voltage (V3) of the first converter unit (3) and/or comparing the voltage (V2) of the accumulator (2) with the voltage (V4) of the second converter unit (4);
- closing the switch if the voltage (V2) of the accumulator is more than the voltage (V3, V4) of at least one of the first and second converter unit of a predetermined threshold.

4. System according to claim 1, wherein the first converter unit (3) has a voltage (V3) between 170 V and 500 V, and the second converter unit has a voltage (V4) between 170 V and 500 V, and the accumulator has a voltage (V2) between 700 V and 900 V.

5. Method (1) to recharge an accumulator (2) of electric energy of an electric vehicle (EV), comprising:
- connecting a first galvanically isolated converter unit (3) and the accumulator (2) in a first electrical circuit (8), to recharge the accumulator (2) with the first converter unit (3),
- connecting a second galvanically isolated converter unit (4) and the accumulator (2) in a second electrical circuit (9), to recharge the accumulator (2) with the second converter unit (4),
- selectively controlling the recharge of the accumulator (2) with one of the first or the second converter units (3, 4) on said first and second electrical circuit (8, 9), or with both the first and the second converter units (3, 4) in parallel,
- providing a switch (5), connected to the first converter unit (3) and to the second converter unit (4), adapted to connect in series the first converter unit (3) and the second converter unit (4) and to form a third electrical circuit (10) connecting in series the first and second converter units with the accumulator (2), to recharge the accumulator (2) with the first converter unit (3) and the second connected unit (4) in series, **characterized by**:
- further providing a first diode (6) between the accumulator (2) and the first converter unit (3) on said first electrical circuit (8), wherein an end of the first diode (6) is connected to the connection of the switch (5) with the first converter unit (3) and an opposite end is connected to one of the accumulator (2) terminal, to prevent a current flow from the accumulator (2) to the first converter unit (3) on the first electrical circuit (8), and
- a second diode (7) between the accumulator (2) and the second converter unit (4) on said second electrical circuit (9), an end of the second diode (7) being connected to the connection of the switch (5) with the second converter unit (4) and
an opposite end being connected to the other accumulator (2) terminal, to prevent a current flow from the accumulator (2) to the second converter unit (4) on the second electrical circuit (9),
- detecting a voltage (V2) of the accumulator (2);
- opening the switch (switch off) if a voltage (V3+V4) of the first and second converter units (3, 4) connected in series is not compatible with the voltage (V2) of the accumulator, and recharging the accumulator (2) with one of the first or the second converter units (3, 4) on said first and second electrical circuit (8, 9), or with both the first and the second converter units (3, 4) in parallel, or
- closing the switch (switch on) if said voltage (V2) of the accumulator is compatible with the voltage (V3+V4) of the first and second converter units (3, 4) connected in series, and recharging the accumulator (2) with the first and second converter units (3, 4) in series on said third electrical circuit (10) or to provide current from the accumulator (2) to the first and the second converter units (3, 4)

6. Method according to claim 5, **characterized by** the fact that if said voltage (V2) of the accumulator is compatible with both the voltage (V3+V4) of the first and second converter units (3, 4) connected in series and with the voltage (V3, V4) of the first and second converter units (3, 4) connected in parallel, said controller opens said switch (5) to recharge the accumulator (2) with the first and the second converter units (3, 4) in parallel.

## Patentansprüche

1. System (1) zum Wiederaufladen eines elektrischen Energiespeichers (2) eines Elektrofahrzeugs (EV), umfassend:
- eine erste Wandlereinheit (3) mit einer ersten Spannung (V3) und mindestens eine zweite Wandlereinheit (4) mit einer zweiten Spannung (V4),
- eine erste elektrische Schaltung (8), die die erste Wandlereinheit (3) und den Energiespeicher (2) verbindet, um den Energiespeicher (2) mit der ersten Wandlereinheit (3) wiederaufzuladen,
- eine zweite elektrische Schaltung (9), die die zweite Wandlereinheit (4) und den Energiespeicher (2) verbindet, um den Energiespeicher (2) mit der zweiten Wandlereinheit (4) wiederaufzuladen,
wobei die erste Wandlereinheit (3) und die zweite Wandlereinheit (4) galvanisch isoliert sind;
wobei die erste Wandlereinheit (3) und die zweite Wandlereinheit (4) in einer Aufladestation enthalten sind;
**gekennzeichnet durch**:
- einen Schalter (5), der mit der ersten Wandlereinheit (3) und mit der zweiten Wandlereinheit (4) verbunden ist und dazu ausgebildet ist, die erste Wandlereinheit (3) und die zweite Wandlereinheit (4) in Reihe zu schalten und eine dritte elektrische Schaltung (10) zu bilden, die die erste und die zweite Wandlereinheit in Reihe mit dem Energiespeicher (2) verbindet, um den Energiespeicher (2) mit der ersten Wandlereinheit (3) und der zweiten verbundenen Einheit (4) in Reihe wiederaufzuladen,:
- eine erste Diode (6) zwischen dem Energiespeicher (2) und der ersten Wandlereinheit (3) an der ersten elektrischen Schaltung (8), wobei ein Ende der ersten Diode (6) mit der Verbindung des Schalters (5) mit der ersten Wandlereinheit (3) verbunden ist und ein entgegengesetztes Ende mit einem Anschluss des Energiespeichers (2) verbunden ist, um einen Stromfluss vom Energiespeicher (2) zur ersten Wandlereinheit (3) an der ersten elektrischen Schaltung (8) zu verhindern,
- eine zweite Diode (7) zwischen dem Energiespeicher (2) und der zweiten Wandlereinheit (4) an der zweiten elektrischen Schaltung (9), wobei ein Ende der zweiten Diode (7) mit der Verbindung des Schalters (5) mit der zweiten Wandlereinheit (4) verbunden ist und ein entgegengesetztes Ende mit dem anderen Anschluss des Energiespeichers (2) verbunden ist, um einen Stromfluss vom Energiespeicher (2) zur zweiten Wandlereinheit (4) an der zweiten elektrischen Schaltung (9) zu verhindern,
- eine Steuerung des Schalters (5), die dazu ausgebildet ist, eine Spannung (V2) des Energiespeichers (2) zu erfassen, und dazu ausgebildet ist, den Schalter zu öffnen (Ausschaltung) und den Energiespeicher (2) mit einer der ersten oder der zweiten Wandlereinheit (3, 4) an der ersten und zweiten elektrischen Schaltung (8, 9) oder mit sowohl der ersten als auch der zweiten Wandlereinheit (3, 4) parallel wiederaufzuladen, wenn eine Spannung (V3+V4) der ersten und zweiten Wandlereinheit (3, 4), die in Reihe geschaltet sind, nicht mit der Spannung (V2) des Energiespeichers kompatibel ist, oder den Schalter zu schließen (Einschaltung) und den Energiespeicher (2) mit der ersten und der zweiten Wandlereinheit (3, 4) in Reihe an der dritten elektrischen Schaltung (10) wiederaufzuladen oder um Strom von dem Energiespeicher (2) zu der ersten und der zweiten Wandlereinheit (3, 4) bereitzustellen, wenn die Spannung (V2) des Energiespeichers mit der die Spannung (V3+V4) der ersten und zweiten Wandlereinheit (3, 4), die in Reihe geschaltet sind, kompatibel ist

2. System nach Anspruch 1, **dadurch gekennzeichnet, dass** die Steuerung dazu konfiguriert ist, den Schalter (5) zu öffnen, um den Energiespeicher (2) mit der ersten und der zweiten Wandlereinheit (3, 4) parallel wiederaufzuladen, wenn die Spannung (V2) des Energiespeichers sowohl mit der Spannung (V3+V4) der ersten und zweiten Wandlereinheit (3, 4), die in Reihe geschaltet sind, als auch mit der Spannung (V3, V4) der ersten und zweiten Wandlereinheit (3, 4), die parallel geschaltet sind, kompatibel ist.

3. System nach Anspruch 1, **dadurch gekennzeichnet, dass** die Steuerung dazu konfiguriert ist, den Schalter (5) zu öffnen, wenn die Spannung (V2) des Energiespeichers (2) mit der Spannung (V3, V4) von nur einer der ersten und zweiten Wandlereinheit (3, 4) kompatibel ist, oder den Schalter (5) zu schließen, wenn die Spannung des Energiespeichers (2) mit einer Summe der Spannungen (V3, V4) der ersten und zweiten Wandlereinheit (3, 4) kompatibel ist, wobei die Steuerung weiter konfiguriert ist, um die folgende Kompatibilitätsprüfung durchzuführen:
- Vergleichen der Spannung (V2) des Energiespeichers (2) mit der Spannung (V3) der ersten Wandlereinheit (3) und/oder Vergleichen der Spannung (V2) des Energiespeichers (2) mit der Spannung (V4) der zweiten Wandlereinheit (4);
- Schließen des Schalters, wenn die Spannung (V2) des Energiespeichers größer ist als die Spannung (V3, V4) von mindestens einer der ersten und zweiten Wandlereinheit von einem vorbestimmten Schwellenwert.

4. System nach Anspruch 1, wobei die erste Wandlereinheit (3) eine Spannung (V3) zwischen 170 V und 500 V aufweist und die zweite Wandlereinheit eine Spannung (V4) zwischen 170 V und 500 V aufweist und der Energiespeicher eine Spannung (V2) zwischen 700 V und 900 V aufweist.

5. Verfahren (1) zum Wiederaufladen eines elektrischen Energiespeichers (2) eines Elektrofahrzeugs (EV), umfassend:
- Verbinden einer ersten galvanisch isolierten Wandlereinheit (3) und des Energiespeichers (2) in einer ersten elektrischen Schaltung (8), um den Energiespeicher (2) mit der ersten Wandlereinheit (3) wiederaufzuladen,
- Verbinden einer zweiten galvanisch isolierten Wandlereinheit (4) und des Energiespeichers (2) in einer zweiten elektrischen Schaltung (9), um den Energiespeicher (2) mit der zweiten Wandlereinheit (4) wiederaufzuladen,
- selektives Steuern der Wiederaufladung des Energiespeichers (2) mit einer der ersten oder der zweiten Wandlereinheit (3, 4) an der ersten und zweiten elektrischen Schaltung (8, 9) oder mit sowohl der ersten als auch der zweiten Wandlereinheit (3, 4) parallel,
- Bereitstellen eines Schalters (5), der mit der ersten Wandlereinheit (3) und mit der zweiten Wandlereinheit (4) verbunden ist und dazu ausgebildet ist, die erste Wandlereinheit (3) und die zweite Wandlereinheit (4) in Reihe zu schalten und eine dritte elektrische Schaltung (10) zu bilden, die die erste und die zweite Wandlereinheit in Reihe mit dem Energiespeicher (2) verbindet, um den Energiespeicher (2) mit der ersten Wandlereinheit (3) und der zweiten verbundenen Einheit (4) in Reihe wiederaufzuladen,
**gekennzeichnet durch**:
- ferner Bereitstellen einer ersten Diode (6) zwischen dem Energiespeicher (2) und der ersten Wandlereinheit (3) an der ersten elektrischen Schaltung (8), wobei ein Ende der ersten Diode (6) mit der Verbindung des Schalters (5) mit der ersten Wandlereinheit (3) verbunden ist und ein entgegengesetztes Ende mit einem Anschluss des Energiespeichers (2) verbunden ist, um einen Stromfluss vom Energiespeicher (2) zur ersten Wandlereinheit (3) an der ersten elektrischen Schaltung (8) zu verhindern, und
- eine zweite Diode (7) zwischen dem Energiespeicher (2) und der zweiten Wandlereinheit (4) an der zweiten elektrischen Schaltung (9), wobei ein Ende der zweiten Diode (7) mit der Verbindung des Schalters (5) mit der zweiten Wandlereinheit (4) verbunden ist und ein entgegengesetztes Ende mit dem anderen Anschluss des Energiespeichers (2) verbunden ist, um einen Stromfluss vom Energiespeicher (2) zur zweiten Wandlereinheit (4) an der zweiten elektrischen Schaltung (9) zu verhindern,
- Erfassen einer Spannung (V2) des Energiespeichers (2);
- Öffnen des Schalters (Ausschalten), wenn eine Spannung (V3+V4) der ersten und zweiten Wandlereinheit (3, 4), die in Reihe geschaltet sind, nicht mit der Spannung (V2) des Energiespeichers kompatibel ist, und Wiederaufladen des Energiespeichers (2) mit einer der ersten oder der zweiten Wandlereinheit (3, 4) an der ersten und zweiten elektrischen Schaltung (8, 9) oder mit sowohl der ersten als auch der zweiten Wandlereinheit (3, 4) parallel, oder
- Schließen des Schalters (Einschalten), wenn die Spannung (V2) des Energiespeichers mit der Spannung (V3+V4) der ersten und zweiten Wandlereinheit (3, 4), die in Reihe geschaltet sind, kompatibel ist, und Wiederaufladen des Energiespeichers (2) mit der ersten und der zweiten Wandlereinheit (3, 4) in Reihe an der dritten elektrischen Schaltung (10) oder um Strom von dem Energiespeicher (2) zu der ersten und der zweiten Wandlereinheit (3, 4) bereitzustellen

6. Verfahren nach Anspruch 5, **dadurch gekennzeichnet, dass** die Steuerung den Schalter (5) öffnet, um den Energiespeicher (2) mit der ersten und der zweiten Wandlereinheit (3, 4) parallel wiederaufzuladen, wenn die Spannung (V2) des Energiespeichers sowohl mit der Spannung (V3+V4) der ersten und zweiten Wandlereinheit (3, 4), die in Reihe geschaltet sind, als auch mit der Spannung (V3, V4) der ersten und zweiten Wandlereinheit (3, 4), die parallel geschaltet sind, kompatibel ist.

## Revendications

1. Système (1) destiné à recharger un accumulateur (2) d'énergie électrique d'un véhicule hybride (EV), comportant :
- une première unité de convertisseur (3) présentant une première tension (V3) et au moins une deuxième unité de convertisseur (4) présentant une deuxième tension (V4),
- un premier circuit électrique (8) connectant la première unité de convertisseur (3) et l'accumulateur (2), pour recharger l'accumulateur (2) avec la première unité de convertisseur (3),
- un deuxième circuit électrique (9) connectant la deuxième unité de convertisseur (4) et l'accumulateur (2), pour recharger l'accumulateur (2) avec la deuxième unité de convertisseur (4),
la première unité de convertisseur (3) et la deuxième unité de convertisseur (4) étant galvaniquement isolées ;
la première unité de convertisseur (3) et la deuxième unité de convertisseur (4) étant comprises dans une borne de recharge électrique ;
**caractérisé en ce que** :
- un commutateur (5) connecté à la première unité de convertisseur (3) et à la deuxième unité de convertisseur (4) est adapté pour connecter en série la première unité de convertisseur (3) et la deuxième unité de convertisseur (4) et pour former un troisième circuit électrique (10) connectant en série les première et deuxième unités de convertisseur avec l'accumulateur (2), pour recharger l'accumulateur (2) avec la première unité de convertisseur (3) et la deuxième unité de convertisseur (4) en série ;
- une première diode (6) entre l'accumulateur (2) et la première unité de convertisseur (3) sur ledit premier circuit électrique (8), une extrémité de la première diode (6) étant connectée à la connexion du commutateur (5) avec la première unité de convertisseur (3) et une extrémité opposée étant connectée à une des bornes de l'accumulateur (2), afin d'empêcher une circulation du courant de l'accumulateur (2) vers la première unité de convertisseur (3) sur le premier circuit électrique (8),
- une seconde diode (7) entre l'accumulateur (2) et la deuxième unité de convertisseur (4) sur ledit deuxième circuit électrique (9), une extrémité de la seconde diode (7) étant connectée à la connexion du commutateur (5) avec la deuxième unité de convertisseur (4) et une extrémité opposée étant connectée à l'autre borne de l'accumulateur (2), afin d'empêcher une circulation du courant de l'accumulateur (2) vers la deuxième unité de convertisseur (4) sur le deuxième circuit électrique (9),
- un contrôleur du commutateur (5) adapté pour détecter une tension (V2) de l'accumulateur (2), et adapté pour ouvrir le commutateur (éteindre) et pour recharger l'accumulateur (2) avec une unité parmi la première ou la deuxième unité de convertisseur (3, 4) sur lesdits premier et deuxième circuits électriques (8, 9), ou à la fois avec la première et la deuxième unité de convertisseur (3, 4) en parallèle, si une tension (V3-V4) des première et deuxième unités de convertisseur (3, 4) connectées en série n'est pas compatible avec la tension (V2) de l'accumulateur, ou pour fermer le commutateur (allumer) et pour recharger l'accumulateur (2) avec les première et deuxième unités de convertisseur (3, 4), en série sur ledit troisième circuit électrique (10) ou pour alimenter en courant depuis l'accumulateur (2) les première et deuxième unités de convertisseur (3, 4), si ladite tension (V2) de l'accumulateur est compatible avec la tension (V3-V4) des première et deuxième unités de convertisseur (3, 4) connectées en série.

2. Système selon la revendication 1, **caractérisé en ce que** ledit contrôleur est configuré pour ouvrir ledit commutateur (5) pour recharger l'accumulateur (2) avec les première et deuxième unités de convertisseur (3, 4) en parallèle, si ladite tension (V2) de l'accumulateur est compatible à la fois avec la tension (V3+V4) des première et deuxième unités de convertisseur (3, 4) connectées en série et avec la tension (V3, V4) des première et deuxième unités de convertisseur (3, 4) connectées en parallèle.

3. Système selon la revendication 1, **caractérisé en ce que** ledit contrôleur est configuré pour ouvrir le commutateur (5), si la tension (V2) de l'accumulateur (2) est compatible avec la tension (V3, V4) de seulement une des première et deuxième unités de convertisseur (3, 4), ou pour fermer le commutateur (5), si la tension de l'accumulateur (2) est compatible avec une somme des tensions (V3, V4) des première et deuxième unités de convertisseur (3, 4), le contrôleur étant en outre configuré pour réaliser le contrôle de compatibilité suivant :
- comparer la tension (V2) de l'accumulateur (2) avec la tension (V3) de la première unité de convertisseur (3) et/ou comparer la tension (V2) de l'accumulateur (2) avec la tension (V4) de la deuxième unité de convertisseur (4) ;
- fermer le commutateur si la tension (V2) de l'accumulateur est supérieure à la tension (V3, V4) d'au moins une des première et deuxième unités de convertisseur d'un seuil prédéterminé.

4. Système selon la revendication 1, dans lequel la première unité de convertisseur (3) présente une tension (V3) entre 170 V et 500 V, et la deuxième unité de convertisseur présente une tension (V4) entre 170 V et 500 V, et l'accumulateur présente une tension (V2) entre 700 V et 900 V.

5. Procédé (1) destiné à recharger un accumulateur (2) d'énergie électrique d'un véhicule hybride (EV), consistant à :
- connecter une première unité de convertisseur galvaniquement isolée (3) et l'accumulateur (2) dans un premier circuit électrique (8), pour recharger l'accumulateur (2) avec la première unité de convertisseur (3),
- connecter une deuxième unité de convertisseur galvaniquement isolée (4) et l'accumulateur (2) dans un deuxième circuit électrique (9), pour recharger l'accumulateur (2) avec la deuxième unité de convertisseur (4),
- commander sélectivement la recharge de l'accumulateur (2) avec une unité parmi la première ou la deuxième unité de convertisseur (3, 4) sur lesdits premier et deuxième circuits électriques (8, 9), ou à la fois avec la première et la deuxième unité de convertisseur (3, 4) en parallèle,
- fournir un commutateur (5) connecté à la première unité de convertisseur (3) et à la deuxième unité de convertisseur (4), adapté pour connecter en série la première unité de convertisseur (3) et la deuxième unité de convertisseur (4) et pour former un troisième circuit électrique (10) connectant en série les première et deuxième unités de convertisseur avec l'accumulateur (2), pour recharger l'accumulateur (2) avec la première unité de convertisseur (3) et la deuxième unité de convertisseur (4) en série, **caractérisé en ce qu'**il consiste à :
- fournir en outre une première diode (6) entre l'accumulateur (2) et la première unité de convertisseur (3) sur ledit premier circuit électrique (8), où une extrémité de la première diode (6) est connectée à la connexion du commutateur (5) avec la première unité de convertisseur (3) et une extrémité opposée est connectée à une des bornes de l'accumulateur (2), afin d'empêcher une circulation du courant de l'accumulateur (2) vers la première unité de convertisseur (3) sur le premier circuit électrique (8), et
- une seconde diode (7) entre l'accumulateur (2) et la deuxième unité de convertisseur (4) sur ledit deuxième circuit électrique (9), une extrémité de la seconde diode (7) étant connectée à la connexion du commutateur (5) avec la deuxième unité de convertisseur (4) et une extrémité opposée étant connectée à l'autre borne de l'accumulateur (2), afin d'empêcher une circulation du courant de l'accumulateur (2) vers la deuxième unité de convertisseur (4) sur le deuxième circuit électrique (9),
- détecter une tension (V2) de l'accumulateur (2) ;
- ouvrir le commutateur (éteindre) si une tension (V3+V4) des première et deuxième unités de convertisseur (3, 4) connectées en série n'est pas compatible avec la tension (V2) de l'accumulateur, et recharger l'accumulateur (2) avec une unité parmi la première ou la deuxième unité de convertisseur (3, 4) sur lesdites première et deuxième unités électriques (8, 9), ou à la fois avec la première et la deuxième unité de convertisseur (3, 4), en parallèle, ou
- fermer le commutateur (allumer) si ladite tension (V2) de l'accumulateur est compatible avec la tension (V3+V4) des première et deuxième unités de convertisseur (3, 4) connectées en série, et recharger l'accumulateur (2) avec les première et deuxième unités de convertisseur (3, 4) en série sur ledit troisième circuit électrique (10) ou pour alimenter en courant depuis l'accumulateur (2) les première et deuxième unités de convertisseur (3, 4).

6. Procédé selon la revendication 5, **caractérisé en ce que** si ladite tension (V2) de l'accumulateur est compatible à la fois avec la tension (V3+V4) des première et deuxième unités de convertisseur (3, 4) connectées en série et avec la tension (V3, V4) des première et deuxième unités de convertisseur (3, 4) connectées en parallèle, ledit contrôleur ouvre ledit commutateur (5) pour recharger l'accumulateur (2) avec les première et deuxième unités de convertisseur (3, 4) en parallèle.
